# EUROPÄISCHE PATENTANMELDUNG

(11) **EP 4 636 983 A1**
(43) Veröffentlichungstag der Anmeldung: **22.10.2025**
(21) Anmeldenummer: 24170977.3
(22) Anmeldetag: 18.04.2024
(51) Int. Cl.: H02J 7/00, B25F 5/00, H02J 7/34

(54) **ELEKTRONISCHE EINRICHTUNG ZUR BATTERIEBETRIEBENEN ENERGIEVERSORGUNG EINES ELEKTROWERKZEUGS**

(71) Anmelder: Hilti Aktiengesellschaft, 9494 Schaan (LI)
(72) Erfinder: Rehorik, Kilian, 97082 Würzburg (DE); Steentjes, Simon, 86807 Buchloe (DE); Asmus, Torsten, 87600 Kaufbeuren (DE); Hurka, Florian, 86459 Margertshausen (DE); Deisling, Markus, 86836 Untermeitingen (DE); Ruff, Christian, 86391 Stadtbergen (DE); Gerold, Johannes, 82418 Murnau (DE); Dotz, Boris, 86937 Scheuring (DE)
(74) Vertreter: Hilti Aktiengesellschaft Corporate Intellectual Property

(57) **Zusammenfassung**

Die Erfindung betrifft eine elektronische Einrichtung zur Energieversorgung eines Elektrowerkzeugs, umfassend eine zweipolige Anschlussschnittstelle für eine Batterieeinheit, welche mittels je zugeordneter elektrischer Leitungen über eine ansteuernde Leistungselektronikeinheit an einen Elektromotor als Antrieb angeschlossen ist, wobei zwischen der Anschlussschnittstelle und der Leistungselektronikeinheit mindestens ein die beiden elektrischen Leitungen verbindender Zwischenkreiskondensator zur Gleichspannungsstabilisierung angeordnet ist, wobei die zweipolige Anschlussschnittstelle eingangsseitig einer Gleichspannungswandlereinheit angeschlossen ist, welche ausgangsseitig an der Leistungselektronikeinheit angeschlossen ist, wobei der Zwischenkreiskondensator an den elektrischen Leitungen im Abschnitt zwischen der Gleichspannungswandlereinheit und der Leistungselektronikeinheit angeschlossen ist.

## Beschreibung

Die vorliegende Erfindung betrifft eine elektronische Einrichtung zur Energieversorgung eines Elektrowerkzeugs, umfassend eine zumindest zweipolige Anschlussschnittstelle für eine Batterieeinheit, welche mittels je zugeordneter elektrischer Leitungen über eine ansteuernde Leistungselektronikeinheit an einen Elektromotor als Antrieb angeschlossen ist, wobei zwischen der Anschlussschnittstelle und der Leistungselektronikeinheit mindestens ein die beiden elektrischen Leitungen verbindender Zwischenkreiskondensator zur Gleichspannungsstabilisierung angeordnet ist.

Das Einsatzgebiet der Erfindung erstreckt sich vornehmlich auf Elektrohandwerkzeuge, wie beispielsweise Elektroschrauber, Bohrhämmer, Meißelhämmer und dergleichen, welche ihre elektrische Energieversorgung über einen austauschbaren Akkumulator beziehen.

### Stand der Technik

Gemäß dem allgemein bekannten Stand der Technik werden derartige Elektrowerkzeuge mit elektronischen Einrichtungen angesteuert, welche in der Zuleitung der elektrischen Energie von der Anschlussstelle für die Batterieeinheit zur einer Leistungselektronikeinheit für die Ansteuerung des Elektromotors einen beide elektrische Leitungen verbindendenden Zwischenkreiskondensator zur Gleichspannungsstabilisierung umfassen. Ein solcher Zwischenkreiskondensator, der auch als so genannter DC-Link-Kondensator bezeichnet wird, dient neben einer Stabilisierung der Gleichspannung auch einer Begrenzung von Spannungsschwankungen. Derartige möglichst durchschlagsichere Kondensatoren sind meist auf Basis einer verlustarmen Polypropylenfolie aufgebaut und weisen gewöhnlich eine hohe Wechselstrombelastbarkeit sowie eine niedrige Verlustleistung auf, die sich in geringer Eigenerwärmung äußert. Daneben kommen auch gewöhnliche Elektrolytkondensatoren für diesen Einsatzzweck zur Anwendung. Normaler Weise wird ein solcher Zwischenkreiskondensator unmittelbar benachbart zur Leistungselektronikeinheit, also parallel zu deren Anschlüssen, angeordnet, um den bestimmungsgemäßen Zweck einer Gleichspannungsstabilisierung zu erfüllen.

Ist jedoch eine Batterieeinheit nicht an der elektronischen Einrichtung des Elektrowerkzeugs angeschlossen, ist der Zwischenkreiskondensator entladen. Im Moment des Anschließens der Batterieeinheit fließt ein recht hoher Einschaltstrom von der Batterieeinheit in den Zwischenkreiskondensator. Der hierdurch entstehende Stromimpuls kann elektrische oder elektronische Komponenten des Elektrowerkzeugs schädigen, wie beispielsweise Anschlüsse, Leitungen oder auch Leiterplattenlötstellen der Elektronik.

Um diese Schädigungen zu vermeiden, ist bisher versucht worden, einen Unterbrechungsschalter in den Stromkreis zwischen Batterieeinheit und Leistungselektronikeinheit derart einzufügen, dass eine Vorladung des Zwischenkreiskondensators bei geöffnetem Unterbrechungsschalter über einen elektrischen Widerstand ermöglicht wird und welcher erst dann geschlossen wird, wenn das Spannungsniveau der Batterieeinheit mit der am Zwischenkreiskondensator anliegenden Spannung gleich ist.

Allerdings verursacht eine derartige Vorladung eines Zwischenkreiskondensators über einen Widerstand Verluste, reduziert die Betriebszeit der Batterieeinheit und erfordert eine Wartezeit, bis das Elektrowerkzeug nutzbar ist.

Es ist daher die Aufgabe der vorliegenden Erfindung, eine elektronische Einrichtung zur Energieversorgung eines Elektrowerkzeugs der gattungsgemäßen Art dahingehend weiter zu verbessern, dass schädigende Stromimpulse infolge des Anschlusses einer Batterieeinheit verlustfrei und innerhalb kürzester Zeit vermieden werden.

### Offenbarung der Erfindung

Die Aufgabe wird ausgehend von einer elektronischen Einrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Der Anspruch 5 ist auf ein akkumulatorbetriebenes Elektrowerkzeug, umfassend eine erfindungsgemäße elektronische Einrichtung zur Energieversorgung, gerichtet.

Die Erfindung schließt die technische Lehre ein, dass die mindestens zweipolige Anschlussschnittstelle für eine Batterieeinheit einer elektronischen Einrichtung zur Energieversorgung eines Elektrowerkzeugs eingangsseitig einer Gleichspannungswandlereinheit angeschlossen ist, welche ausgangsseitig an der Leistungselektronikeinheit zur Ansteuerung des Elektromotors angeschlossen ist, wobei der Zwischenkreiskondensator an den elektrischen Leitungen im Abschnitt zwischen der Gleichspannungswandlereinheit und der Leistungselektronikeinheit angeschlossen ist.

Durch diese zusätzliche Implementierung einer Gleichspannungswandlereinheit und der spezifischen Verschaltung mit den übrigen Komponenten des Stromkreises werden schädigende Stromimpulse bei Anschluss einer Batterieeinheit unterbunden. Außerdem unterliegt eine Gleichspannungswandlereinheit gewöhnlich einer sehr geringen Verlustleistung und verzögert nicht die Betriebsbereitschaft des Elektrowerkzeugs. Mit anderen Worten imitiert die zusätzlich implementierte Gleichspannungswandlereinheit den Einschaltstrom mit geringeren Verlusten innerhalb einer kurzen Zeitdauer.

Vorzugsweise steuert die Gleichspannungswandlereinheit ihre Ausgangsspannung U₂ derart, dass der den Einschaltstrom repräsentierende Ausgangsstrom I₂ auf einen schädigungsfreien maximalen Ausgangsstrom I_{2_max} limitiert wird. Über die Dimensionierung und Einstellung der elektronischen Komponenten einer an sich bekannten Gleichspannungswandlereinheit lässt sich der maximale Ausgangsstrom I_{2_max} zuverlässig auf einen Wert einstellen, der eine Schädigung anderer Komponenten der elektronischen Einrichtung verhindert.

Gemäß einer bevorzugten Ausführungsform ist die im Rahmen der vorliegenden Erfindung zum Einsatz kommende Gleichspannungswandlereinheit nach Art bzw. Prinzip einer Ladungspumpe, eines Abwärtswandlers, eines Aufwärtswandlers, eines Sperrwandlers oder dergleichen ausgebildet. Die Gleichspannungswandlereinheit ist vorzugsweise derart ausgelegt, dass die zugeführte Eingangsspannung U₁ gleich der abgegebenen Ausgangsspannung U₂ ist, wobei die Ausgangsspannung U₂ zeitverzögert zur aufgeschalteten Eingangsspannung U₁ hochgesteuert wird. Diese Hochsteuerung wird durch die elektrischen Parameter der elektronischen Komponenten der Gleichspannungswandlereinheit bewirkt.

Gemäß dem bevorzugten Anwendungsgebiet der Elektrowerkzeuge ist die Batterieeinheit vorzugsweise als ein Niedervolt-Akkumulator im Versorgungsspannungsbereich zwischen 12 bis 36 Volt ausgebildet. Vorzugsweise beträgt die Versorgungsspannung 22 Volt und entspricht damit speziell der 22 Volt-Plattform des Anmelders für eine breite Palette von batteriebetriebenen Elektrohandwerkzeugen.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Blockschaltbilddarstellung einer elektronischen Einrichtung zur Energieversorgung eines batteriebetriebenen Elektrowerkzeugs, und
- Figur 2: eine graphische Darstellung von Spannung/Strom-Zeitverläufen gemäß der erfindungsgemäßen Lösung.

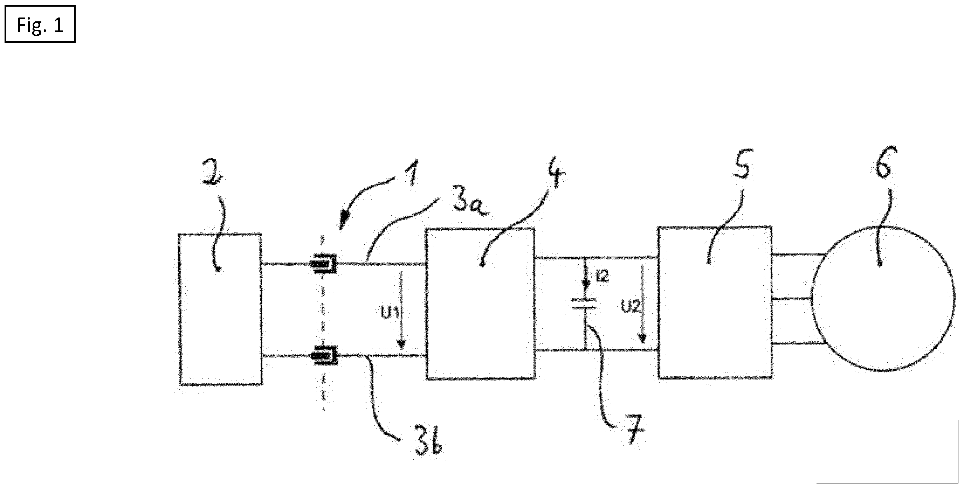

Gemäß Figur 1 umfasst eine elektronische Einrichtung zur Energieversorgung eines - nicht weiter dargestellten - Elektrowerkzeugs eine zweipolige Anschlussschnittstelle 1 für eine hieran lösbar anschließbare elektrische Batterieeinheit 2, welche als Akkumulator ausgebildet ist. Von der zweipoligen Anschlussschnittstelle 1 verlaufen je zugeordnete elektrische Leitungen 3a und 3b zu einer Gleichspannungswandlereinheit 4 zur spannungsgleichen Wandlung einer Eingangsspannung U₁ zu einer Ausgangsspannung U₂, welche einer Leistungselektronikeinheit 5 zugeführt wird. Die Leistungselektronikeinheit 5 umfasst eine drehzahlgeregelte Ansteuerung eines Elektromotors 6 als Antrieb des Elektrowerkzeugs.

Zwischen der Gleichspannungswandlereinheit 4 und der Leistungselektronikeinheit 5 ist ein Zwischenkreiskondensator 7 zur Gleichspannungsstabilisierung eingefügt. Infolge der Verbindung der Batterieeinheit 2 an die elektronische Einrichtung fließt ein den entsprechenden Einschaltstrom repräsentierender Ausgangsstrom I₂ durch den Zwischenkreiskondensator 7.

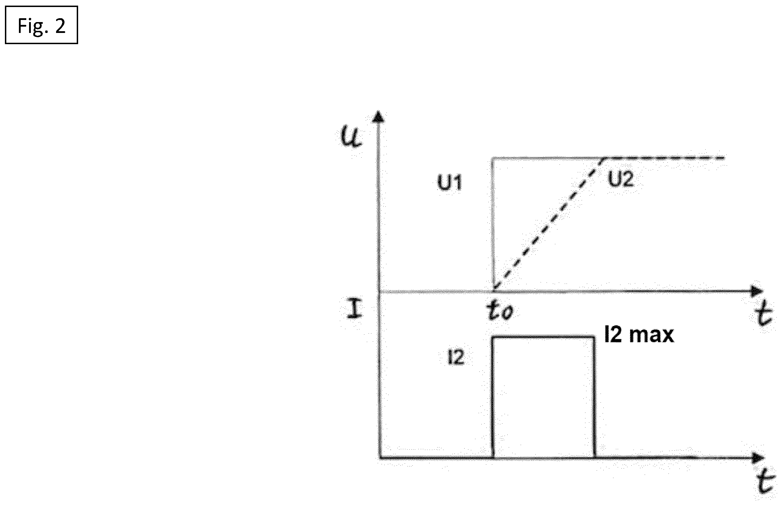

Gemäß Fig. 2 liegt zum Verbindungszeitpunkt to der Batterieeinheit an die elektronische Einrichtung die volle Eingangsspannung U₁ an, welche durch die zwischengeschaltete Gleichspannungswandlereinheit erst zeitverzögert auf die Ausgangsspannung U₂ ansteigt, welche der Eingangsspannung U₁ entspricht. Dabei steigt der den Einschaltstrom repräsentierende Ausgangsstrom I₂ ausgangsseitig der Gleichspannungswandlereinheit und damit eingangsseitig der Leistungselektronikeinheit nicht über einen durch die Gleichspannungswandlereinheit limitierten maximalen Ausgangsstrom I_{2_max} an. Hierdurch wird eine Schädigung anderer Komponenten der elektronischen Einrichtung vermieden.

Im Prinzip steuert also die Gleichspannungswandlereinheit im Moment des Anschlusses der Batterieeinheit die Ausgangsspannung U₂ derart, dass der Einschaltstrom I₂ limitiert wird, wobei das zum Betrieb des Elektrowerkzeugs erforderliche Spannungsniveau innerhalb kürzester Zeit erreicht wird.

### Bezugszeichenliste

- 1: Anschlussschnittstelle
- 2: Batterieeinheit
- 3: elektrische Leitung
- 4: Gleichspannungswandlereinheit
- 5: Leistungselektronikeinheit
- 6: Elektromotor
- 7: Zwischenkreiskondensator

- U₁: Eingangsspannung
- U₂: Ausgangsspannung
- I₂: Ausgangsstrom (Einschaltstrom)
- I_{2_max}: maximaler Ausgangsstrom, limitiert
- to: Verbindungszeitpunkt

## Patentansprüche

1. Elektronische Einrichtung zur Energieversorgung eines Elektrowerkzeugs, umfassend eine zweipolige Anschlussschnittstelle (1) für eine Batterieeinheit (2), welche mittels je zugeordneter elektrischer Leitungen (3a, 3b) über eine ansteuernde Leistungselektronikeinheit (5) an einen Elektromotor (6) als Antrieb angeschlossen ist, wobei zwischen der Anschlussschnittstelle (1) und der Leistungselektronikeinheit (5) mindestens ein die beiden elektrischen Leitungen (3a, 3b) verbindender Zwischenkreiskondensator (7) zur Gleichspannungsstabilisierung angeordnet ist,
**dadurch gekennzeichnet, dass** die zweipolige Anschlussschnittstelle (1) eingangsseitig einer Gleichspannungswandlereinheit (4) angeschlossen ist, welche ausgangsseitig an der Leistungselektronikeinheit (5) angeschlossen ist, wobei der Zwischenkreiskondensator (7) an den elektrischen Leitungen (3a, 3b) im Abschnitt zwischen der Gleichspannungswandlereinheit (4) und der Leistungselektronikeinheit (5) angeschlossen ist.

2. Elektronische Einrichtung nach Anspruch 1,
**dadurch gekennzeichnet, dass** die Gleichspannungswandlereinheit (4) ihre Ausgangsspannung (U₂) derart steuert, dass der den Einschaltstrom repräsentierende Ausgangsstrom (I₂) auf einen schädigungsfreien maximalen Ausgangsstrom (I_{2_max}) limitiert ist.

3. Elektronische Einrichtung nach Anspruch 1,
**dadurch gekennzeichnet, dass** die Gleichspannungswandlereinheit (4) nach Art einer Ladungspumpe, eines Abwärtswandlers, eines Aufwärtswandlers, eines Sperrwandlers oder dergleichen ausgebildet ist.

4. Elektronische Einrichtung nach Anspruch 1,
**dadurch gekennzeichnet, dass** die Batterieeinheit (2) als ein Niedervolt-Akkumulator im Versorgungsspannungsbereich zwischen 12 bis 36 Volt, vorzugsweise für 22 Volt, ausgebildet ist.

5. Akkumulatorbetriebenes Elektrowerkzeug, insbesondere Elektroschrauber, Bohrhammer oder Meißelhammer, mit einer elektronischen Einrichtung zur Energieversorgung nach einem der vorstehenden Ansprüche.
